# EUROPÄISCHE PATENTANMELDUNG

(11) **EP 2 050 995 A1**
(43) Veröffentlichungstag der Anmeldung: **22.04.2009**
(21) Anmeldenummer: 08017436.0
(22) Anmeldetag: 04.10.2008
(51) Int. Cl.: F16L 25/00

(54) **Verfahren zum Verbinden von Schlauchleitungen mit einem Anschlussteil und Anschlussverbindung**

(30) Priorität: 18.10.2007 DE 102007049851
(71) Anmelder: Witzenmann GmbH, 75175 Pforzheim (DE)
(72) Erfinder: Bantscheff, Richard, 75233 Tiefenbronn (DE); Bessler, Frank, 75446 Wiernsheim (DE); Mauch, Stefan, 75305 Neuenbürg (DE); Riemensperger, Wolfgang, 75248 Ölbronn-Dürrn (DE); Schiffner, Andreas, 75417 Mühlacker (DE)
(74) Vertreter: Lemcke, Brommer & Partner

(57) **Zusammenfassung**

Eine Anschlussverbindung (1) für Schlauchleitungen (2) mit einem zumindest abschnittsweise konischen Anschlussteil (3, 4), insbesondere Anschlussrohr, bei der ein axiales Ende der Schlauchleitung (2) stoffschlüssig an dem Anschlussteil (3, 4) festgelegt ist, zeichnet sich dadurch, dass das Schlauchleitungsende in seinem endständigen Bereich konisch aufgeweitet ist, dass das Anschlussteil (3, 4) mit seinem konischen Abschnitt in den konisch aufgeweiteten Bereich der Schlauchleitung (2) eingesteckt ist und dass in einem Überlappungsbereich von Schlauchleitung (2) und Anschlussteil (3, 4) die Schlauchleitung (2) flächig an dem Anschlussteil (3, 4) festgelegt ist.

## Beschreibung

Die Erfindung betrifft eine Anschlussverbindung nach dem Oberbegriff des Patentanspruchs 1 für Schlauchleitungen mit einem zumindest abschnittsweise konischen Anschlussteil, insbesondere Anschlussrohr, bei der ein axiales Ende der Schlauchleitung stoffschlüssig an dem Anschlussteil festgelegt ist.

Weiterhin betrifft die Erfindung ein Verfahren nach dem Oberbegriff des Patentanspruchs 10 zum Verbinden von insbesondere gewellten Schlauchleitungen mit einem zumindest abschnittsweise konischen Anschlussteil, insbesondere Anschlussrohr, bei dem ein axiales Ende der Schlauchleitung stoffschlüssig an dem Anschlussteil festgelegt wird.

Insbesondere für CO₂-dichte Klimaschläuche, jedoch auch für Gasschläuche und Ölrückführleitungen ist es bekannt, zumindest Abschnittsweise konische Anschlussteile, insbesondere Anschlussrohre, in axiale Enden einer Schlauchleitung einzustecken und stoffschlüssig mit dieser zu verbinden. Dabei kann die Schlauchleitung insbesondere als metallischer Ringwellschlauch ausgebildet sein.

Aus der WO 2005/003612 A1 ist in diesem Zusammenhang bekannt, das Schlauchleitungsende in seinem endständigen Bereich gleichmäßig, das heißt zylindrisch aufzuweiten, anschließend das Anschlussteil in den aufgeweiteten Bereich der Schlauchleitung einzustecken und dann im Überlappungsbereich von Schlauchleitung und Anschlussteil festzulegen.

Hierbei ist als nachteilig anzusehen, dass es aufgrund fertigungsbedingter Toleranzen sowohl der Schlauchleitung als auch der Anschlussteile regelmäßig dazu kommt, dass zwischen Anschlussteil und Schlauchleitungsende ein Luftspalt verbleibt, was sich negativ auf die Festigkeit der Anschlussverbindung auswirkt. Außerdem sind zusätzliche Maßnahmen zum nachträglichen Erreichen einer Anlage des Schlauchleitungsende an dem Anschlussteil erforderlich, wobei jedoch regelmäßig keine flächige Anlage erreicht wird, die für die angestrebte Verbindungsfestigkeit von Vorteil wäre.

Wenn in Abwandlung des vorbeschriebenen Standes der Technik Anschlussteile mit einem endständigen konischen Abschnitt verwendet werden, um beim Fügen herstellungsbedingte Toleranzen auszugleichen und für eine verbesserte Anlage von Schlauchleitung und Anschlussteil zu sorgen, ist darüber hinaus als nachteilig anzusehen, dass zunächst durch eine zusätzliche Kraftmessung ein Ausgangspunkt für einen anschließenden weggesteuerten Fügevorgang ermittelt werden muss. Zudem bewirkt die konische Ausgestaltung der Anschlussteile eine Umformung der Anschlussteile während des Fügevorgangs, was regelmäßig mit einer Abnahme des Innendurchmessers derselben einhergeht. Dies wirkt sich nachteilig auf ein Durchströmungsverhalten der Anschlussverbindung bzw. einer Gesamtanordnung aus Schlauchleitung und Anschlussteilen auf.

Der Erfindung liegt die Aufgabe zugrunde, eine Anschlussverbindung und ein Verfahren der jeweils eingangs genannten Art dahingehend weiterzuentwickeln, dass eine erhöhte Stabilität der Verbindung zwischen Schlauchleitung und Anschlussteil erreicht wird, wobei zugleich ein Durchströmungsverhalten der Anschlussverbindung unbeeinträchtigt bleiben soll.

Die Erfindung löst die Aufgabe mittels einer Anschlussverbindung mit den Merkmalen des Patentanspruchs 1 sowie mittels eines Verfahrens mit den Merkmalen des Patentanspruchs 10.

Vorteilhafte Weiterbildungen der erfindungsgemäßen Anschlussverbindung bzw. des erfindungsgemäßen Verfahrens sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Anschlussverbindung für Schlauchleitungen mit einem zumindest abschnittsweise konischen Anschlussteil, insbesondere Anschlussrohr, bei der ein axiales Ende der Schlauchleitung stoffschlüssig an dem Anschlussteil festgelegt ist, dadurch gekennzeichnet, dass das Schlauchleitungsende in seinem endständigen Bereich konisch aufgeweitet ist, dass das Anschlussteil mit seinem konischen Abschnitt in den konisch aufgeweiteten Bereich der Schlauchleitung eingesteckt ist und dass in einem Überlappungsbereich von Schlauchleitung und Anschlussteil die Schlauchleitung flächig an dem Anschlussteil festgelegt ist.

Erfindungsgemäß ist ein Verfahren zum Verbinden von insbesondere gewellten Schlauchleitungen mit einem zumindest abschnittsweise konischen Anschlussteil, insbesondere Anschlussrohr, bei dem ein axiales Ende der Schlauchleitung stoffschlüssig an dem Anschlussteil festgelegt wird, dadurch gekennzeichnet, dass das Schlauchleitungsende in seinem endständigen Bereich konisch aufgeweitet wird, dass anschließend das Anschlussteil mit seinem konischen Abschnitt in den konisch aufgeweiteten Bereich der Schlauchleitung eingesteckt wird und dass dann in einem Überlappungsbereich von Schlauchleitung und Anschlussteil die Schlauchleitung flächig mit dem Anschlussteil verbunden, vorzugsweise verschweißt wird.

Alternative Verbindungsmöglichkeiten sehen vor, dass die Schlauchleitung und das Anschlussteil miteinander verlötet oder verklebt werden. Die genannte Schweißverbindung umfasst Reibschweißen, Rollnahtschweißen, WIG-Schweißen, Mikroplasmaschweißen und Kondensatorentladungsschweißen.

Erfindungsgemäß ist also vorgesehen, dass sowohl ein axiales Ende der Schlauchleitung als auch ein entsprechender Endabschnitt eines Anschlussteils, das in das Schlauchleitungsende eingesteckt ist bzw. eingesteckt werden soll, konisch-komplementär, das heißt mit gleicher Konizität ausgebildet sind, so dass es zu einer ausgeprägt flächigen Anlage im Überlappungsbereich kommt, wobei erfindungsgemäß keinerlei zusätzliche plastische Umformeffekte beim Fügen von Schlauchleitung und Anschlussteil auftreten.

Dabei beträgt ein Kegelwinkel des konischen Abschnitts des Anschlussteils bzw. des konisch aufgeweiteten Bereichs der Schlauchleitung vorzugsweise etwa 3°. Allerdings ist der Kegelwinkel nicht auf den vorgenannten exakten Wert festgelegt, sondern kann im Rahmen der vorliegenden Erfindung vorteilhafterweise zwischen 1° und 10° betragen. Unter Umständen ist auch eine Vergrößerung des Kegelwinkels bis auf Werte deutlich größer als 10° möglich. Außerdem können die Kegelwinkel der Schlauchleitung und des Anschlussteils auch geringfügig voneinander abweichen.

In Weiterbildung der erfindungsgemäßen Anschlussverbindung kann vorgesehen sein, dass es sich bei der stoffschlüssigen Verbindung zwischen Schlauchleitung und Anschlussteil um eine Schweißverbindung handelt, die vorzugsweise in Form einer Rundnaht mittels eines Schutzgas-Laserschweißprozesses hergestellt wird. Auf alternative Verbindungsarten wurde bereits weiter oben hingewiesen.

Wie bereits ausgeführt, kann es sich bei der Schlauchleitung um einen mechanisch gewellten, insbesondere um einen ringgewellten Metallschlauch handeln, jedoch ist die vorliegende Erfindung nicht auf derartig ausgebildete Schlauchleitungen beschränkt.

Vorliegend wird die zum Herstellen der erfindungsgemäßen Anschlussverbindung verwendete Schlauchleitung vorzugsweise dadurch erhalten, dass durchlaufende Schlauchleitungsmeterware in einer Innenkrempe (Wellental) getrennt wird. Dadurch kann sich ein größerer Innendurchmesser des getrennten Schlauchleitungsendes ergeben, was bei der anschließenden Bearbeitung (konische Aufweitung, Umformung) zur Aufnahme des konischen Anschlussteils von Vorteil ist. Insbesondere ein mechanisches, spanarmes Trennen ist nur in einem Wellental möglich, da dieses geometrisch bedingt eine hohe Radialsteifigkeit besitzt und deshalb beim Trennen nicht einfällt. Demgegenüber erfolgt herkömmlicherweise die Trennung zunächst durch Grobschnitt im Bereich eines Wellenbergs, woran sich in aufwändiger Weise ein Feinschnitt im Bereich eines Wellentals anschließt. Allerdings kann auch im Rahmen der vorliegenden Erfindung das Trennen weiterhin auf einem Wellenberg erfolgen.

Das Trennen selbst kann dabei durch (Laser-)Schneiden, Sägen, Abstanzen oder Wasserstrahlschneiden erfolgen.

In Weiterbildung des erfindungsgemäßen Verfahrens erfolgt die mechanische Trennung mittels eines umlaufenden Messers an stehender Schlauchleitungsmeterware, wodurch sich ein praktisch abfallloser Prozess ergibt. Insbesondere im Vergleich zu solchen Verfahren, bei denen die Trennung mittels Laser erfolgt, ergibt sich dadurch ein erheblicher Investitionskostenvorteil.

Während herkömmlicherweise nach erfolgtem Trennen das Verbinden von Schlauchleitung und Anschlussteil im Wesentlichen ohne weitere Vorbereitung des Schlauchleitungsschnittendes (Bordvorbereitung) erfolgt, sieht eine Weiterbildung des erfindungsgemäßen Verfahrens vor, dass das axiale Ende der Schlauchleitung in besonderer Weise vorbereitet wird (Bordvorbereitung): Zunächst wird das Schlauchleitungsende definiert umgelegt. Dieses Umlegen kann insbesondere dazu führen, dass ein letzter, endständiger Wellenberg der Schlauchleitung wenigstens eines der folgenden Merkmale aufweist: eine zumindest teilweise nach innen gezogene endständig-äußere Flanke; eine gegenüber den anderen Wellenbergen veränderte Höhe; und eine gegenüber den anderen Wellenbergen zum Ende der Schlauchleitung hingeneigt innere Flanke. Insbesondere durch das Einziehen der endständig-äußeren Flanke des letzten Wellenbergs wird ein Ein- oder Weiterreißen vom Schlauchende her zuverlässig vermieden. Anschließend kann das bereits erwähnte Einformen eines Konus, insbesondere eines 3°-Konus, als exakte Gegenkontur des Anschlussteils erfolgen.

In Weiterbildung des erfindungsgemäßen Verfahrens erfolgt das Umlegen oder Umformen des Schlauchleitungsendes dergestalt, dass dabei die Breite des späteren Fügebereichs (Schweißbereichs) vergrößert wird, was beim direkten Fügen des Anschlussteils ohne vorherige Bordvorbereitung nicht möglich ist.

Aufgrund der komplementären Ausgestaltung von Schlauchleitung und Anschlussteil kann das Anschlussteil anschließend rein weggesteuert in das entsprechend vorbereitete Schlauchleitungsende gefügt werden.

Die so hergestellte Gesamtanordnung aus Schlauchleitung, insbesondere Balg, und Anschlussteil bzw. -teilen kann anschließend mit einer Polymerummantelung, vorzugsweise aus Silikon, versehen werden, alternativ durch Umspritzen oder durch Überziehen eines entsprechend abgelängten Polymerschlauchelements.

Die resultierende Anordnung kann als Innenschlauchanordnung für die Herstellung zusammengesetzter (Klima-)Schlauchanordnungen verwendet werden, welche den Gegenstand einer parallelen Patentanmeldung der Anmelderin mit dem anwaltlichen Aktenzeichen 21 423 bildet, deren gesamte Offenbarung hiermit durch Bezugnahme mit in die vorliegende Beschreibung aufgenommen wird.

Entsprechend ergibt sich unter Verwendung der erfindungsgemäßen Anschlussverbindung eine zusammengesetzte Schlauchanordnung aus einer Innenschlauchanordnung, wie einem metallischen Ringwellschlauch mit wenigstens einem endständigen Anschlussteil und mit einer Polymerummantelung, und einem die Innenschlauchanordnung umgebenden metallischen Geflechtschlauch, die sich dadurch auszeichnet, dass der Geflechtschlauch an wenigstens einem seiner Enden mit einer außen liegenden Endhülse stoffschlüssig verbunden ist und dass der Geflechtschlauch auf die Innenschlauchanordnung aufgebracht und im Bereich der Endhülse kraft- und/oder formschlüssig und/oder stoffschlüssig an dem Anschlussteil festgelegt ist.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: eine erste Ausgestaltung der erfindungsgemäßen Anschlussverbindung;
- Figur 2: eine Detailansicht der Anschlussverbindung gemäß Figur 1;
- Figur 3: eine Detailansicht einer weiteren Ausgestaltung der erfindungsgemäßen Anschlussverbindung;
- Figur 4: eine weitere Ausgestaltung der erfindungsgemäßen Anschlussverbindung; und
- Figur 5: eine Detailansicht der Anschlussverbindung gemäß Figur 4.

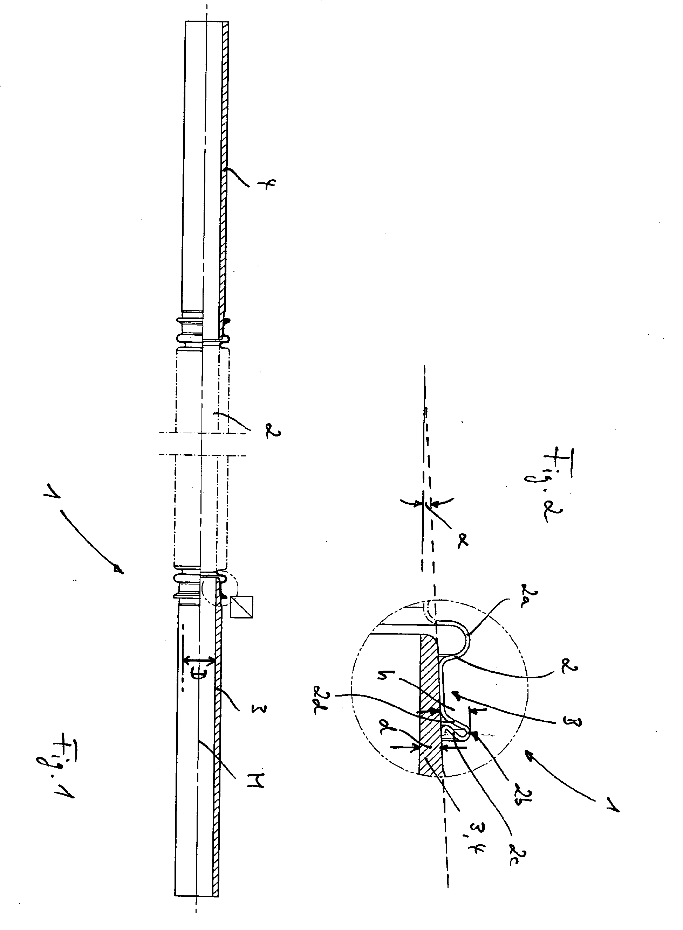

Figur 1 zeigt eine erste Ausgestaltung der erfindungsgemäßen Anschlussverbindung 1 für Schlauchleitungen 2 mit einem hohlen, zumindest abschnittsweise konischen Anschlussteil 3, 4, das vorliegend als Anschlussrohr mit Innendurchmesser D ausgebildet ist. Die Schlauchleitung 2 ist vorliegend als ringgewellter Metallschlauch oder Balg ausgebildet. Die Schlauchleitung 2 ist an ihren beiden Enden mit jeweils einem Anschlussteil 3 bzw. 4 verbunden, wobei das betreffende axiale Ende der Schlauchleitung 2 stoffschlüssig an dem jeweiligen Anschlussteil 3 bzw. 4 festgelegt ist. Die Verbindung zwischen den Anschlussteilen 3, 4 und dem entsprechenden axialen Ende der Schlauchleitung 2 ist in Figur 2 detailliert dargestellt.

Figur 2 zeigt eine Detailansicht der Anschlussverbindung gemäß Figur 1. Demnach ist das Anschlussteil 3, 4 an seinem in das axiale Ende der Schlauchleitung 2 eingeführten Ende konisch zulaufend ausgebildet, wobei eine Wandstärke d des Anschlussteils 3, 4 kontinuierlich abnimmt, während der Innendurchmesser D des Anschlussteils 3, 4 (vgl. Figur 1) konstant bleibt. Der Kegelwinkel α im Bereich des konischen Abschnitts des Anschlussteils 3, 4, das heißt der Winkel zwischen der konisch zulaufenden Außenwand des Anschlussteils 3, 4 und dessen Mittellinie M (Figur 1) beträgt vorliegend in etwa 3°.

Das axiale Ende der Schlauchleitung 2 ist komplementär zu der vorstehend beschriebenen Ausgestaltung des konischen Abschnitts des Anschlussteils 3, 4 konisch aufgeweitet, wobei die Konizität des axialen Endes der Schlauchleitung 2 derjenigen des Anschlussteils 3, 4 entspricht. Auf diese Weise nimmt die Schlauchleitung 2 in ihrem axialen Ende den konischen Abschnitt des Anschlussteils 3, 4 formschlüssig auf, wobei beim Einstecken des Anschlussteils 3, 4 in das axiale Ende der Schlauchleitung 2 ein Überlappungsbereich von Schlauchleitung 2 und Anschlussteil 3, 4 entsteht, der im Wesentlichen dem in Figur 2 gezeigten Ausschnitt entspricht. Innerhalb des Überlappungsbereichs liegt die Schlauchleitung 2 aufgrund der konischen Ausgestaltung sowohl des axialen Endes der Schlauchleitung 2 als auch des Anschlussteils 3, 4 bei B flächig an dem Anschlussteil 3, 4 an. In dem flächigen Anlagebereich (Anlagefläche) B ist die Schlauchleitung 2 stoffschlüssig an dem Anschlussteil 3, 4 festgelegt, vorzugsweise mittels einer durch einen Laserschweißprozess unter Schutzgas hergestellten Rundnaht, die in den Figuren aus Gründen der Übersichtlichkeit nicht dargestellt ist.

Die Anlagefläche B der Schlauchleitung 2 an den Anschlussteilen 3, 4 ist im Vergleich zu vorbekannten Lösungen, bei denen ein Anschlussteil mit endständigem konischen Abschnitt in eine Schlauchleitung mit einem zylindrisch ausgebildeten axialen Ende eingeführt ist, in axialer Richtung vergrößert, so dass sich eine vergrößerte Fügefläche und damit eine stabilere Verbindung zwischen Schlauchleitung 2 und Anschlussteil 3, 4 ergibt.

Die konische Aufweitung des axialen Endes der Schlauchleitung 2 erfolgt mittels eines nicht gezeigten konischen Werkzeugs, dessen Ausgestaltung oder Formgebung jedoch grundsätzlich derjenigen des konischen Abschnitts des Anschlussteils 3, 4 entspricht, so dass durch das konische Werkzeug der weiter oben beschriebene 3°-Konus als exakte Gegenkontur des Anschlussteils 3, 4 in das axiale Ende der Schlauchleitung 2 eingeformt wird. Dabei wird das axiale Ende der Schlauchleitung zugleich radial aufgeweitet, so dass ein Innendurchmesser der Schlauchleitung 2 im Bereich nicht aufgeweiteter Wellentäler derselben im Wesentlichen dem Innendurchmesser D des Anschlussteils 3, 4 entspricht (vgl. Figur 1 in Zusammenschau mit Figur 2).

Wie der Figur 2 weiterhin zu entnehmen ist, ist die Schlauchleitung 2 zumindest im Bereich ihrer beiden letzten endständigen Wellen 2a, 2b konisch aufgeweitet. Während die vorletzte endständige Welle 2a der Schlauchleitung 2 eine ansonsten im Wesentlichen unveränderte Ausgestaltung gegenüber anderen Wellen (nicht gezeigt) der Schlauchleitung 2 aufweist, wurde die endständig letzte Welle (Vorwelle) 2b der Schlauchleitung 2 vielfach umgeformt. Entsprechend weist sie eine gegenüber den anderen Wellen verringerte Höhe h, eine nach innen gezogene endständig-äußere Flanke 2c und eine zum Ende der Schlauchleitung 2 hin geneigte innere Flanke 2d auf. Die vorstehend beschriebene geneigte Ausbildung der inneren Flanke 2d der letzten Welle 2b geht einher mit einer axialen Verlagerung dieser Flanke in Richtung des axialen Endes der Schlauchleitung 2, das heißt nach rechts in Figur 2, wodurch sich die in axialer Richtung vergrößerte Anlagefläche B ergibt.

Insbesondere die vorstehend beschriebene Form der endständig-letzten Welle 2b der Schlauchleitung 2 wird durch Einwirken geeignet ausgestalteter Umformwerkzeuge von außen auf die Schlauchleitung 2 erreicht, die vorliegend aus Gründen der Übersichtlichkeit nicht dargestellt sind.

Die endständig letzte Welle 2b der Schlauchleitung 2 erfährt auf diese Weise eine mehrfache Umlenkung, wodurch ein Ein- oder Weiterreißen der Schlauchleitung 2 vom Schlauchende her zuverlässig vermieden wird.

Bei der Herstellung der erfindungsgemäßen Anschlussverbindung 1 wird das Anschlussteil 3, 4 mit seinem konischen Abschnitt rein weggesteuert in das vorbereitete axiale Ende der Schlauchleitung 2 eingeführt und dort vorzugsweise stoffschlüssig festgelegt, wie oben beschrieben. Eine zusätzliche Ermittlung des Ausgangspunkts des weggesteuerten Fügevorgangs durch Kraftmessung, wie nach dem Stand der Technik ohne konische Aufweitung des Schlauchleitungsendes erforderlich, ist erfindungsgemäß nicht notwendig.

Wie insbesondere Figur 2 zeigt, ist die Vorwelle 2b als Vollwelle ausgestaltet, das heißt beim Ablängen der Schlauchleitung 2 von einem größeren Schlauchleitungsvorrat (Schlauchleitungsmeterware) erfolgte das Trennen im Bereich eines Wellentals (Innenkrempe) der Schlauchleitung. In ihrer Ausgestaltung als Vollwelle ist die Vorwelle 2b erheblich stabiler als eine auf Außenkrempe geschnittene Halbwelle der Schlauchleitung.

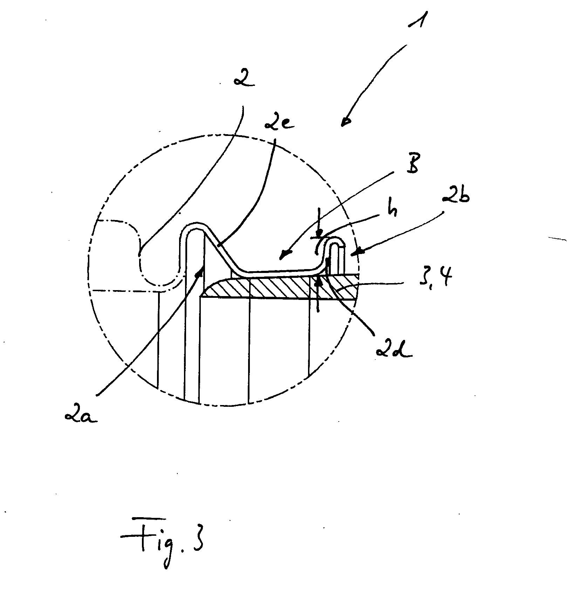

Figur 3 zeigt in einer der Figur 2 im Wesentlichen entsprechenden Darstellungsart eine weitere Ausgestaltung der erfindungsgemäßen Anschlussverbindung. Vorliegend sei nur auf die wesentlichen Unterschiede in den Ausgestaltungen gemäß Figur 3 und Figur 2 explizit eingegangen.

Gemäß der in Figur 3 gezeigten Ausgestaltung weist der vorletzte endständige Wellenberg 2a der Schlauchleitung 2 eine äußere Flanke 2e auf, deren Steilheit gegenüber entsprechenden Flanken anderer Wellenberge der Schlauchleitung 2 vermindert ist. Die Vorwelle 2b ist dagegen ohne die eingezogene äußere Flanke 2c gemäß Figur 2 ausgebildet. Des Weiteren entspricht die Steilheit der inneren Flanke 2d der Vorwelle 2b im Wesentlichen derjenigen anderer Wellenberge der Schlauchleitung 2, mit Ausnahme der äußeren Flanke 2e des vorletzten Wellenbergs 2a. Dabei ist die Höhe h der Vorwelle 2b gegenüber den anderen Wellenbergen stark vermindert, so dass sich wiederum bei B eine vergrößerte Anlagefläche der Schlauchleitung 2 an dem Anschlussteil 3, 4 ergibt, wobei die Schlauchleitung 2 und das Anschlussteil 3, 4 in diesem Bereich wiederum komplementär und mit gleicher Konizität ausgebildet sind. Auf diese Weise ist im Bereich B eine stabile stoffschlüssige Verbindung zwischen Schlauchleitung 2 und Anschlussteil 3, 4 möglich, die in Figur 3 aus Gründen der Übersichtlichkeit ebenfalls nicht explizit dargestellt ist.

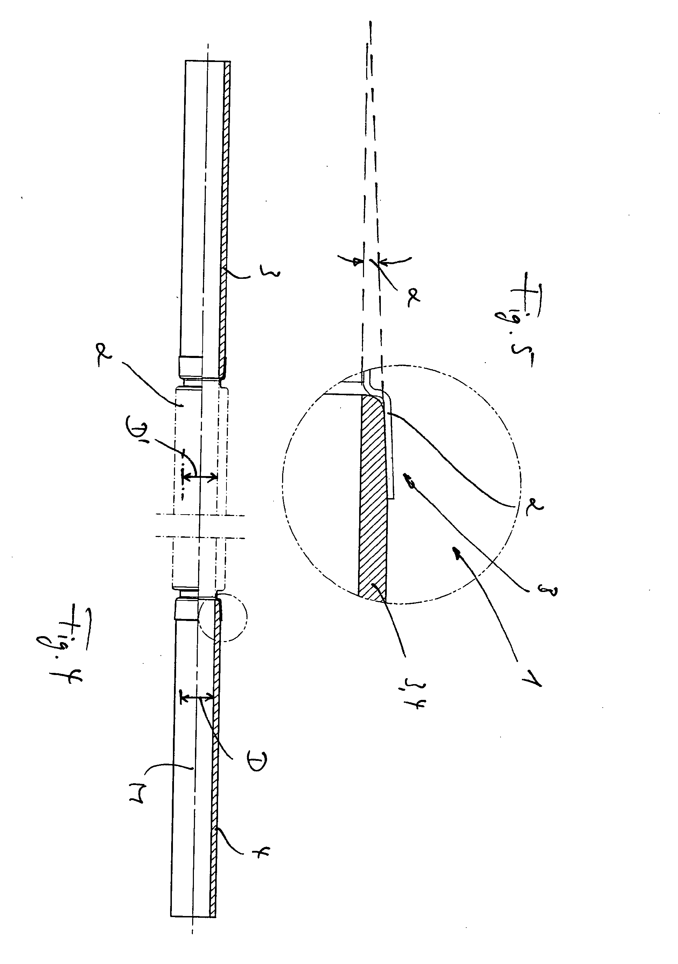

Die Figuren 4 und 5 zeigen eine weitere Ausgestaltung der erfindungsgemäßen Anschlussverbindung 1. Dabei sind auch hier die axialen Enden der Schlauchleitung 2 konisch aufgeweitet, so dass Anschlussteile 3 bzw. 4 mit konisch zulaufenden Endabschnitten in die konisch aufgeweiteten Bereiche der Schlauchleitung 2 einsteckbar bzw. eingesteckt sind. Der Kegelwinkel α im Bereich der Schlauchleitungsenden bzw. der Anschlussteile 3, 4 beträgt wiederum etwa 3°, so dass die Schlauchleitung 2 im Bereich ihrer axialen Enden sowie die Anschlussteile 3, 4 die gleiche Konizität besitzen. Ein lichter Innendurchmesser D' der Schlauchleitung 2 außerhalb der konisch aufgeweiteten Bereiche entspricht im Wesentlichen dem Innendurchmesser D der Anschlussteile 3, 4.

Im Bereich des konisch aufgeweiteten axialen Endes der Schlauchleitung 2 und des konisch zulaufenden Abschnitts der Anschlussteile 3, 4 überlappen Schlauchleitung 2 und Anschlussteile 3, 4 und liegen dabei vollflächig aneinander an, so dass im Bereich B eine stabile, vorzugsweise flächig-stoffschlüssige Verbindung zwischen Schlauchleitung 2 und Anschlussteil 3, 4 realisierbar ist, was aus Gründen der Übersichtlichkeit vorliegend wiederum nicht explizit dargestellt ist.

Durch die oben detailliert beschriebene Bordvorbereitung, das heißt die Ausbildung des flächigen Fügebereichs B (vgl. insbesondere Figuren 2, 3 und 5) entfällt gegenüber dem herkömmlicherweise praktizierten Direktfügen eines insbesondere konischen Anschlussteils in ein (zylindrisch-radial aufgeweitetes) Schlauchleitungsende die Abhängigkeit der geometrischen Ausgestaltung des Anschlussteils von der Toleranz des Schlauchleitungsinnendurchmessers. Durch den erwähnten rein weggesteuerten Fügevorgang werden Toleranzen der Fügetiefe minimiert, was sich vorteilhaft auf die Toleranz der Gesamtschlauchanordnung auswirkt. Da erfindungsgemäß keine Umformung der Schlauchleitung bzw. des Schlauchleitungsendes durch die Anschlussteile und damit auch der Anschlussteile selbst stattfindet, kommt es in den Anschlussteilen zu praktisch keiner Reduzierung des Innendurchmessers D (vgl. Figuren 1 und 4), was sich positiv auf das Durchströmungssverhalten der Anschlussverbindung 1 bzw. der Gesamtanordnung aus Schlauchleitung und Anschlussteilen auswirkt. Somit können alle Schlauchtypen einer Nennweite durch die beschriebene Bordvorbereitung mit Anschlussteilen eines gleichen Designs verbunden werden, was entsprechende Kostenvorteile mit sich bringt.

Darüber hinaus ermöglicht die breite Ausgestaltung der Anlagefläche der Schweißzone B einen weiteren Toleranzausgleich bei der relativen Positionierung von Schlauchleitung 2 und Anschlussteilen 3, 4, so dass eine Schweißnahtlageerkennung nicht zwingend notwendig ist, wodurch sich der Fügeprozess gegenüber dem Stand der Technik weiter vereinfacht. Durch das rein weggesteuerte Fügen der Anschlussteile ist zudem eine genaue Positionierung der Schweißnaht möglich.

Durch den erfindungsgemäß ermöglichten größeren Durchmesser und/oder die vergrößerte Breite des Schweißbereichs entsteht zudem eine höhere Wandstärke des Anschlussteils, wodurch der Schweißprozess bzw. dessen körperliches Ergebnis stabiler wird. Insbesondere resultiert eine bessere Wärmeabfuhr; außerdem ist eine erhöhte Toleranz bei der Schweißnahttiefe möglich.

## Patentansprüche

1. Anschlussverbindung (1) für Schlauchleitungen (2) mit einem zumindest abschnittsweise konischen Anschlussteil (3, 4), insbesondere Anschlussrohr, bei der ein axiales Ende der Schlauchleitung (2) stoffschlüssig an dem Anschlussteil (3, 4) festgelegt ist, **dadurch gekennzeichnet, dass** das Schlauchleitungsende in seinem endständigen Bereich konisch aufgeweitet ist, dass das Anschlussteil (3, 4) mit seinem konischen Abschnitt in den konisch aufgeweiteten Bereich der Schlauchleitung (2) eingesteckt ist und dass in einem Überlappungsbereich von Schlauchleitung (2) und Anschlussteil (3, 4) die Schlauchleitung (2) flächig an dem Anschlussteil (3, 4) festgelegt ist.

2. Anschlussverbindung (1) nach Anspruch 1, **dadurch gekennzeichnet, dass** der konische Abschnitt des Anschlussteils (3, 4) und der konisch aufgeweitete Bereich der Schlauchleitung (2) eine gleiche Konizität aufweisen.

3. Anschlussverbindung (1) nach Anspruch 1 oder 2, **dadurch gekennzeichnet, dass** ein Kegelwinkel (α) des konischen Abschnitts des Anschlussteils (3, 4) und des konisch aufgeweiteten Bereichs der Schlauchleitung (2) zwischen 1 und 10°, vorzugsweise 3° beträgt.

4. Anschlussverbindung (1) nach einem der vorhergehenden Ansprüche, **dadurch gekennzeichnet, dass** ein Innendurchmesser (D) des Anschlussteils (3, 4) in etwa einem lichten Durchmesser (D') der Schlauchleitung (2) in deren nicht aufgeweitetem Bereich entspricht.

5. Anschlussverbindung (1) nach einem der vorhergehenden Ansprüche, **dadurch gekennzeichnet, dass** die stoffschlüssige Verbindung zwischen Schlauchleitung (2) und Anschlussteil (3, 4) eine Schweißverbindung, eine Lötverbindung oder eine Klebeverbindung ist.

6. Anschlussverbindung (1) nach einem der vorhergehenden Ansprüche, **dadurch gekennzeichnet, dass** die Schlauchleitung (2) ein mechanisch gewellter, insbesondere ringgewellter Metallschlauch ist.

7. Anschlussverbindung (1) nach Anspruch 6, **dadurch gekennzeichnet, dass** die Schlauchleitung (2) zumindest im Bereich der beiden letzten endständigen Wellen (2a, 2b) konisch aufgeweitet ist.

8. Anschlussverbindung (1) nach Anspruch 6 oder 7, **dadurch gekennzeichnet, dass** ein letzter endständiger Wellenberg (2b) der Schlauchleitung (2) wenigstens eines der folgenden Merkmale aufweist:
- eine zumindest teilweise nach innen gezogene endständig-äußere Flanke (2c),
- eine gegenüber den anderen Wellenbergen veränderte Höhe (h),
- eine gegenüber den anderen Wellenbergen zum Ende der Schlauchleitung (2) hin geneigte innere Flanke (2d).

9. Anschlussverbindung (1) nach einem der Ansprüche 6 bis 8, **dadurch gekennzeichnet, dass** ein vorletzter endständiger Wellenberg (2a) der Schlauchleitung (2) eine äußere Flanke (2e) mit gegenüber den anderen Wellenbergen verminderter Steilheit ausweist.

10. Verfahren zum Verbinden von insbesondere gewellten Schlauchleitungen (2) mit einem zumindest abschnittsweise konischen Anschlussteil (3, 4), insbesondere Anschlussrohr, bei dem ein axiales Ende der Schlauchleitung (2) stoffschlüssig an dem Anschlussteil (3, 4) festgelegt wird, **dadurch gekennzeichnet, dass** das Schlauchleitungsende in seinem endständigen Bereich konisch aufgeweitet wird, dass anschließend das Anschlussteil (3, 4) mit seinem konischen Abschnitt in den konisch aufgeweiteten Bereich der Schlauchleitung (2) eingesteckt wird und dass dann in einem Überlappungsbereich von Schlauchleitung (2) und Anschlussteil (3, 4) die Schlauchleitung (2) flächig mit dem Anschlussteil (3, 4) verbunden, vorzugsweise verschweißt wird.

11. Verfahren nach Anspruch 10, **dadurch gekennzeichnet, dass** zum Aufweiten des Schlauchleitungsendes ein Konuswerkzeug verwendet wird, dessen Konizität derjenigen des Anschlussteils (3, 4) entspricht, wobei der Kegelwinkel (α) zwischen 1 ° und 10°, vorzugsweise 3° beträgt.

12. Verfahren nach Anspruch 10 oder 11, **dadurch gekennzeichnet, dass** das Anschlussteil (3, 4) ausschließlich weggesteuert in das aufgeweitete Schlauchleitungsende gefügt wird.

13. Verfahren nach einem der Ansprüche 10 bis 12, **dadurch gekennzeichnet, dass** die Schlauchleitung (2) im Bereich des Schlauchendes in einem Wellental von einem Schlauchleitungsvorrat abgetrennt wird.

14. Verfahren nach einem der Ansprüche 10 bis 13, **dadurch gekennzeichnet, dass** vor dem Einstecken des Anschlussteils und/oder vor dem konischen Aufweiten (3,4) ein weiteres Umformen des Schlauchleitungsendes zum Schaffen einer axial verbreiterten Anlagefläche (B) für das Anschlussteil (3, 4) erfolgt, insbesondere im Bereich einer axial endständigen Wellenbergs (2b) der Schlauchleitung (2).
